(19) Europäisches Patentamt
European Patent Office
Office européen des brevets

(11) EP 2 359 124 B1

(12) FASCICULE DE BREVET EUROPEEN

(45) Date de publication et mention de la délivrance du brevet:
18.05.2016 Bulletin 2016/20

(21) Numéro de dépôt: 09768096.1

(22) Date de dépôt: 14.12.2009

(51) Int Cl.:
G01N 23/222 (2006.01)          G01V 5/00 (2006.01)
G01N 23/202 (2006.01)

(86) Numéro de dépôt international:
PCT/EP2009/067102

(87) Numéro de publication internationale:
WO 2010/069931 (24.06.2010 Gazette 2010/25)

(54) **PROCEDE DE DETECTION NON INTRUSIVE D'ELEMENT CHIMIQUE**

VERFAHREN ZUM NICHT STÖRENDEN NACHWEIS EINES CHEMISCHEN ELEMENTS

METHOD FOR THE NON-INTRUSIVE DETECTION OF A CHEMICAL ELEMENT

(84) Etats contractants désignés:
AT BE BG CH CY CZ DE DK EE ES FI FR GB GR HR HU IE IS IT LI LT LU LV MC MK MT NL NO PL PT RO SE SI SK SM TR

(30) Priorité: 15.12.2008 FR 0858564

(43) Date de publication de la demande:
24.08.2011 Bulletin 2011/34

(73) Titulaire: Commissariat à l'Énergie Atomique et aux Énergies Alternatives
75015 Paris (FR)

(72) Inventeurs:
• CARASCO, Cédric
  F-83560 Vinon-sur-Verdon (FR)
• PEROT, Bertrand
  F-13770 Venelles (FR)

(74) Mandataire: Ilgart, Jean-Christophe et al
BREVALEX
95, rue d'Amsterdam
75378 Paris Cedex 8 (FR)

(56) Documents cités:
US-A1- 2002 175 288      US-B1- 6 393 085

• SUDAC D ET AL: "Chemical composition identification using fast neutrons" APPLIED RADIATION AND ISOTOPES, ELSEVIER, OXFORD, GB, vol. 61, no. 1, 1 juillet 2004 (2004-07-01), pages 73-79, XP004508266 ISSN: 0969-8043
• VOURVOPOULOS G ET AL: "A PULSED FAST-THERMAL NEUTRON SYSTEM FOR THE DETECTION OF HIDDEN EXPLOSIVES" NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL, vol. B79, no. 1/04, 2 juin 1993 (1993-06-02), pages 585-588, XP000381502 ISSN: 0168-583X

**Description**

Domaine technique et art antérieur

L'invention concerne un procédé de détection non intrusive d'au moins un élément chimique présent dans un liquide ou un solide.

L'invention s'applique, par exemple, à la détection d'explosif(s), d'arme(s) chimique(s) ou de drogue(s) dans le domaine de la sécurité civile (inspection de bagages, conteneurs de fret, etc.), à la recherche de produits de contrebande (contrôles douaniers), au déminage (sécurité civile et applications militaires) ou encore à la caractérisation des matériaux constitutifs des déchets radioactifs issus de l'industrie nucléaire.

Différentes méthodes sont connues pour la détection non intrusive d'éléments chimiques. Certaines de ces méthodes sont basées sur la mise en oeuvre de mesures neutroniques.

Parmi les méthodes basées sur la mise en oeuvre de mesures neutroniques, certaines identifient les éléments chimiques par détection de rayonnements gamma de capture $(n, \gamma)$ induits par des neutrons thermiques, ou par détection de rayonnements gamma de diffusion inélastique $(n, n'\gamma)$ ou encore par détection de rayonnements gamma faisant suite à d'autres réactions induites par des neutrons rapides, à savoir $(n,p)$, $(n,d)$, $(n,t)$, $(n,\alpha)$, etc.. Dans la suite de la description, l'expression « rayonnement gamma de type inélastique » est utilisée pour tout rayonnement gamma induit par des neutrons rapides.

La détection de rayonnements de capture induits par des neutrons thermiques est plus sensible en utilisant un générateur neutronique pulsé pour l'émission des neutrons car le rapport signal (rayonnement de type capture) sur bruit (rayonnement de type inélastique) est maximum entre les impulsions. Une illustration de ce type de détection est fournie dans le brevet US 6 393 085 B1. Dans ce document on décrit aussi la détection possible de rayonnements gamma de type inélastique, cette fois-ci pendant les impulsions, mais une telle méthode présente une sensibilité de détection nettement moindre qu'en utilisant un tube à particule associée (TPA), qui permet de localiser spatialement l'objet inspecté à partir d'une mesure de temps de vol neutronique dont le principe est décrit en détail dans la demande de brevet US 2007/0241283 A1. En bref, chaque neutron est émis simultanément à une particule $\alpha$ et dans la direction opposée. La détection de la particule $\alpha$ permet de déterminer la direction d'émission du neutron et la mesure du temps séparant la détection de la particule $\alpha$ et du rayonnement $\gamma$ de type inélastique induit par le neutron permet de déterminer le temps de vol neutronique. On dispose donc d'un moyen de localiser en 3D le lieu d'interaction et donc d'éliminer les événements produits en dehors de la zone d'intérêt, d'où une nette amélioration du rapport signal sur bruit par rapport à l'interrogation pulsée. Cependant, comme l'émission du TPA est continue, il s'ensuit que, avec cette méthode, la détection des rayonnements de capture n'est pas optimale en terme de rapport signal sur bruit. Un problème réside en ce que ni l'une ni l'autre des deux méthodes, l'une basée sur le tube pulsé, l'autre sur le TPA, ne permet de détecter simultanément avec la meilleure sensibilité possible les rayonnements de capture et ceux de type inélastique, et par suite d'identifier de manière satisfaisante tous les éléments recherchés. Une fois une première méthode effectuée, il faut ensuite effectuer la deuxième méthode pour élargir le champ des éléments détectables, ou améliorer le niveau de confiance sur la présence de ceux détectables par les deux méthodes. La durée totale d'une opération de détection est en conséquence relativement longue, ce qui représente un inconvénient majeur en terme de sécurité.

L'invention ne présente pas cet inconvénient.

Exposé de l'invention

En effet, l'invention concerne un procédé de détection de présence d'un élément chimique dans un objet par émission de neutrons sur l'objet, caractérisé en ce que l'émission de neutrons sur l'objet est constituée, d'une part, par une émission continue de neutrons provenant d'un générateur neutronique à particule associée et, d'autre part, par une émission d'impulsions neutroniques qui se superposent à l'émission continue de neutrons, les impulsions neutroniques provenant d'un générateur neutronique pulsé qui génère des impulsions neutroniques de durée d'impulsion T2, deux impulsions neutroniques successives étant séparées d'une durée T4, les émissions continue et pulsée de neutrons sur l'objet produisant un rayonnement gamma de capture et un rayonnement gamma de type inélastique, le procédé comprenant une détection du rayonnement gamma de type inélastique et du rayonnement gamma de capture.

Selon une caractéristique supplémentaire de l'invention, le procédé comprend :

- une détection, à l'aide de la technique de la particule associée, pendant les durées T4 qui séparent les impulsions de durées T2, du rayonnement gamma de type inélastique et du rayonnement gamma de capture,
- une formation , dans une plage de temps de vol neutronique relative à l'objet, d'un premier spectre gamma à partir du rayonnement gamma de type inélastique et du rayonnement gamma de capture détectés à l'étape de détection à l'aide de la technique de la particule associée,
- une formation, dans une plage temporelle disjointe de la plage de temps de vol neutronique relative à l'objet ou de toute autre plage de temps de vol neutronique relative à tout autre objet susceptible d'environner l'objet, d'un spectre de bruit de fond aléatoire relatif aux coïncidences fortuites, à partir du rayonnement gamma de type inélastique et du rayonnement gamma de capture détectés à l'étape de détection à l'aide de la technique de la particule associée,

- une formation, à partir du spectre de bruit de fond aléatoire relatif aux coïncidences fortuites, d'un spectre de bruit de fond aléatoire normalisé sur la plage temporelle relative à l'objet,
- une soustraction du premier spectre gamma et du spectre de bruit de fond aléatoire normalisé pour former un deuxième spectre gamma, et
- une étape de recherche de la présence d'un élément chimique dans l'objet à partir du deuxième spectre gamma et de spectres d'éléments chimiques de référence susceptibles d'être détectés pour délivrer une première donnée apte à traduire la présence ou l'absence de l'élément chimique dans l'objet.

Selon une autre caractéristique supplémentaire de l'invention, le procédé comprend, en outre :

- une détection, à l'aide de la technique d'interrogation neutronique pulsée, du rayonnement gamma de capture et du rayonnement gamma de type inélastique, d'une part pendant les durées d'impulsions T2 et, d'autre part, pendant les durées T4 qui séparent les impulsions de durée T2.
- une formation d'un troisième spectre gamma, à partir du rayonnement gamma de capture et du rayonnement gamma de type inélastique détectés, pendant les durées T4, à l'aide de la technique d'interrogation neutronique pulsée,
- une formation, à partir du troisième spectre gamma, d'une première donnée représentative d'au moins une raie de capture de l'élément chimique,
- une formation d'un quatrième spectre gamma constitué d'une pluralité de canaux d'énergie, à partir du rayonnement de type inélastique détecté pendant les durées d'impulsion T2, à l'aide de la technique d'interrogation neutronique pulsée,
- une formation d'un spectre gamma normalisé à partir du quatrième spectre gamma, la formation du spectre gamma normalisé étant effectuée en multipliant le contenu de chaque canal d'énergie du quatrième spectre gamma par un facteur de normalisation F sensiblement proportionnel au nombre de neutrons émis pendant une durée T4 et sensiblement inversement proportionnel au nombre de neutrons émis pendant une durée T2,
- une formation, à partir du spectre gamma normalisé, d'une deuxième donnée représentative d'un bruit de fond de rayonnement gamma de type inélastique,
- une étape de soustraction de la première donnée et de la deuxième donnée,
- une étape de validation de la présence ou de l'absence de l'élément chimique dans l'objet en fonction du résultat de l'étape de soustraction, et
- si la présence de l'élément chimique est validée dans l'objet, une étape supplémentaire qui délivre une deuxième donnée apte à confirmer ou infirmer la validation de la présence de l'élément chimique sur la base du résultat de l'étape de validation et de données de poids relatives aux différentes raies gamma de rayonnement de capture de l'élément chimique, ces poids étant attribués en fonction d'une probabilité de détection et d'un risque d'interférence associés à chaque raie.

Selon encore une autre caractéristique supplémentaire de l'invention, le facteur de normalisation F est donné par l'équation :

$$F = (I_4 \times T4)/(I_2 \times T2) \times [(1-TM(T4))/(1-TM(T2))],$$

où TM(T4) et TM(T2) sont, respectivement, un temps mort d'une électronique de traitement qui traite les signaux électriques issus de la détection des rayonnements gamma pendant les durées T4 et un temps mort d'une électronique de traitement qui traite les signaux électriques issus de la détection des rayonnements gamma détectés pendant les durées T2.

Selon encore une caractéristique supplémentaire du procédé de l'invention, une étape de décision délivre un signal d'alerte si la première donnée ou la deuxième donnée confirme la présence de l'élément chimique.

Selon encore une caractéristique supplémentaire de l'invention, dès lors que la présence de plusieurs éléments chimiques est confirmée, il comprend une étape supplémentaire de calcul de proportions relatives de tout ou partie des éléments chimiques dont la présence est confirmée.

Selon encore une caractéristique supplémentaire du procédé de l'invention, la détection, à l'aide de la technique de la particule associée, du rayonnement gamma de capture et du rayonnement gamma de type inélastique pendant les durées T4 qui séparent les impulsions de durée T2 est effectuée par un détecteur préférentiellement adapté pour la détection de rayonnement gamma de type inélastique.

Selon encore une caractéristique supplémentaire du procédé de l'invention, la détection, à l'aide de la technique d'interrogation neutronique pulsée, du rayonnement gamma de capture et du rayonnement gamma de type inélastique, d'une part, pendant les durées d'impulsion T2 et, d'autre part, pendant les durées T4 qui séparent les impulsions de durée T2 est effectuée par un détecteur préférentiellement adapté pour la détection de rayonnement gamma de capture.

Une utilisation simultanée d'un générateur neutronique à particule associé G1 qui émet des neutrons en continu et d'un générateur neutronique pulsé G2 qui émet des impulsions neutroniques présente - a priori - un inconvénient pour la détection des rayonnements de capture du fait de la présence d'une émission neutronique résiduelle entre les impulsions du générateur G2, laquelle émission résiduelle est due à l'émission continue du générateur G1. Cette émission résiduelle dégrade en effet le rapport signal (rayonnements de capture) sur bruit (rayonnements de type inélastique). De façon avantageuse, le procédé de l'invention propose des moyens pour supprimer cet inconvénient. Dans le cadre de l'invention, l'utilisation combinée des générateurs G1 et G2 permet alors d'obtenir, en une seule acquisition, des mesures exploitables en terme de sensibilité, pour les rayonnements gamma de capture détectés par interrogation neutronique pulsée et pour les rayonnements gamma de type inélastique détectés par la méthode de la particule associée. Le champ des éléments détectables s'en trouve élargi sans augmenter le temps d'acquisition. De plus, pour les éléments détectables par les deux méthodes, le niveau de confiance de la détection est amélioré.

Avec le système de détection de l'invention, il est avantageusement possible d'utiliser une large fraction de la période T des impulsions neutroniques (typiquement 95%) pour détecter simultanément les deux types de rayonnements induits par les neutrons thermiques (capture) et par les neutrons rapides (diffusion inélastique et réactions $(n,\alpha)$, $(n,p)$, etc.)

Brève description des figures

D'autres caractéristiques et avantages de l'invention apparaîtront à la lecture d'un mode de réalisation préférentiel fait en référence aux figures jointes, parmi lesquelles :

- la figure 1 représente un schéma de principe de système de détection non intrusive qui met en oeuvre le procédé de l'invention ;
- la figure 2 représente un spectre d'émission de neutrons conforme à l'invention ;
- la figure 3 représente les étapes d'un cycle de traitement du procédé de détection non intrusif de l'invention ;
- la figure 4 représente un exemple de spectre temporel pour la technique de la particule associée ;
- la figure 5 représente des étapes élémentaires d'une étape particulière du cycle de traitement représenté en figure 3 ;
- la figure 6 représente un pic de détection d'une raie gamma dans un spectre gamma ;

Sur toutes les figures les mêmes références désignent les mêmes éléments.

Description détaillée de modes de réalisation préférentiels de l'invention

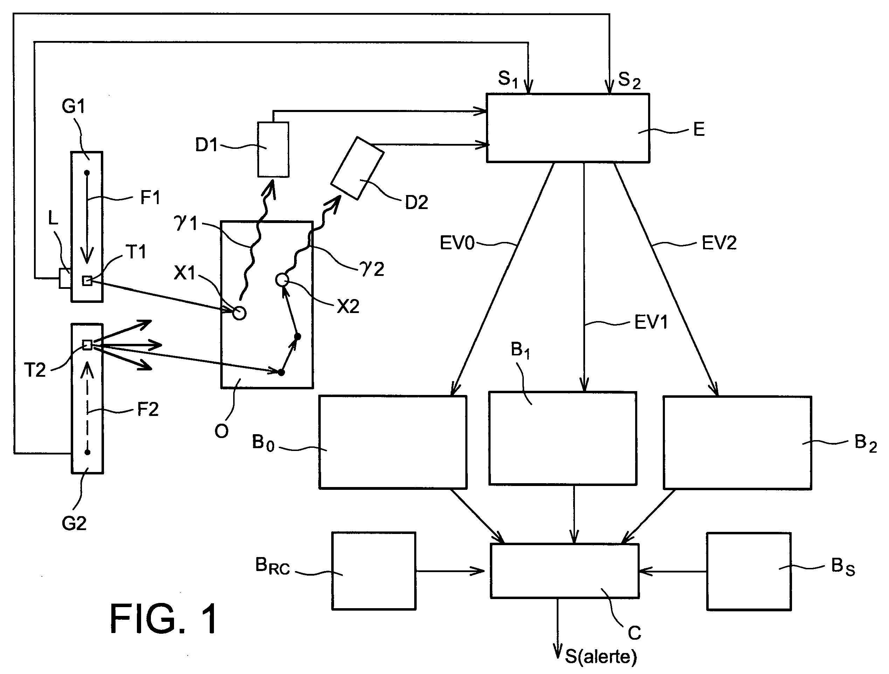

La figure 1 représente un schéma de principe de système de détection non intrusive qui met en oeuvre le procédé de l'invention.

Autour de l'objet O susceptible de contenir des éléments chimiques à détecter, le système de détection de l'invention comprend un générateur neutronique à particule associée G1, un générateur neutronique pulsé G2, deux détecteurs D1 et D2, un circuit électronique de traitement E qui traite et met en forme les signaux issus des détecteurs D1 et D2, des bases de données $B_0$, $B_1$, $B_2$ qui stockent les données délivrées par le circuit électronique de traitement E, des bases de données de référence $B_{RC}$ et $B_S$ qui stockent, respectivement, des données relatives à des raies de capture de référence et à des spectres de référence de rayonnement gamma de type inélastique et un calculateur C qui calcule un signal qui traduit la présence ou l'absence d'élément(s) chimique(s) ou de produits dangereux à partir des données contenues dans les bases de données $B_0$, $B_1$, $B_2$, $B_{RC}$ et $B_S$.

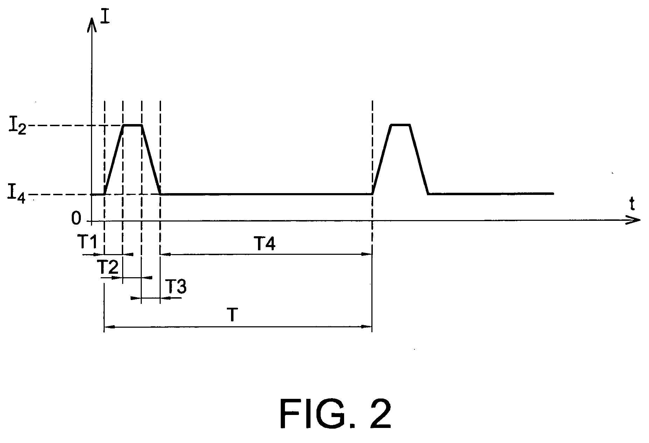

Les générateurs neutroniques G1 et G2 émettent des neutrons dont une partie se dirige vers l'objet à étudier. Les générateurs neutroniques G1 et G2 fonctionnent simultanément (la figure 2 représente l'évolution temporelle de l'intensité d'émission des neutrons émis simultanément par les générateurs neutroniques G1 et G2). Un rayonnement gamma $\gamma 1$ résulte de l'interaction des neutrons émis par le générateur G1 avec l'objet à étudier et un rayonnement gamma $\gamma 2$ résulte de l'interaction des neutrons émis par le générateur G2 avec l'objet à étudier. Chacun des rayonnements gamma $\gamma 1$ ou $\gamma 2$ est susceptible d'être un rayonnement gamma de capture ou un rayonnement gamma de type inélastique.

Chacun des détecteurs D1 ou D2 est apte à détecter un rayonnement de capture et/ou un rayonnement de type inélastique. Toutefois, le détecteur D1 est préférentiellement adapté pour la détection de rayonnement gamma de type inélastique par la méthode de la particule associée (le détecteur D1 est ainsi choisi pour sa forte efficacité de détection et sa bonne résolution temporelle) et le détecteur D2 est préférentiellement adapté pour la détection de rayonnement gamma de capture par la méthode d'interrogation neutronique pulsée (le détecteur D2 est ainsi choisi pour sa bonne résolution en énergie). Le détecteur D1 est, par exemple, un cristal scintillateur de forte efficacité et le détecteur D2, par exemple, un cristal semi-conducteur à haute résolution en énergie.

La figure 1 représente le cas où un noyau du composé chimique X1 subit une interaction avec un neutron du générateur G1, provoquant l'émission d'un rayonnement γ1 qui est détecté par le détecteur D1 et où un noyau du deuxième composé chimique X2 subit une interaction avec un neutron du générateur G2, provoquant l'émission d'un rayonnement γ2 qui est détecté par le détecteur D2. Un neutron issu du générateur G1 induit l'émission d'un rayonnement γ1 dans l'objet O, ici de type inélastique, lequel rayonnement γ1 est détecté dans le détecteur D1, et un neutron émis par le générateur G2 se ralentit du fait de multiples collisions dans l'objet O puis induit l'émission d'un rayonnement gamma γ2 de capture, lequel rayonnement γ2 est détecté dans le détecteur D2. L'invention concerne cependant tous les autres cas possibles de détection comme, par exemple, les cas où les noyaux d'un même élément chimique sont détectés à l'aide des deux rayonnements gamma γ1 et γ2, ou seulement par l'un des deux rayonnements γ1 ou γ2.

De façon connue en soi, le générateur neutronique à particule associée G1 émet des neutrons par action d'un faisceau continu F1 de deutérium sur une cible de tritium T1. L'émission de neutrons s'effectue par une réaction dans laquelle une particule α est produite en même temps qu'un neutron. La particule α est détectée par un détecteur à localisation L qui appartient au générateur G1. Le détecteur à localisation L est, par exemple, constitué d'un ensemble de N détecteurs élémentaires $d_k$ (k=1, 2, ..., N) assemblés sous forme de matrice. La connaissance du détecteur élémentaire $d_k$ qui, parmi les N détecteurs, détecte la particule α permet de situer avec précision la direction dans laquelle la particule α a été émise. Dans un autre mode de réalisation de l'invention, le détecteur à localisation L n'est pas constitué d'un ensemble de détecteurs élémentaires mais d'un seul bloc détecteur sur lequel sont positionnés plusieurs capteurs, la localisation de la particule α étant alors effectuée par un calcul de barycentre. Particule α et neutron étant émis dans des directions sensiblement opposées, la connaissance de la direction dans laquelle la particule α est émise permet de connaître la direction dans laquelle le neutron est émis. Dès qu'une particule α est détectée par le détecteur L, un signal S1 qui traduit la détection de la particule α est transmis au circuit électronique E. Le signal S1 est un signal de synchronisation qui autorise la prise en compte, par le circuit électronique E, d'une impulsion délivrée par le détecteur D1. Le signal S1 comprend également une information qui identifie la direction dans laquelle le neutron a été émis (détecteur élémentaire $d_k$ qui a détecté la particule α dans le cas d'un détecteur matriciel ou position de la détection dans le cas d'un bloc détecteur). Selon le mode de réalisation décrit ci-dessus, le signal S1 de synchronisation est délivré par le détecteur L. Dans un autre mode de réalisation de l'invention, le signal de synchronisation S1 est délivré par le détecteur D1, dès lors que celui-ci a reçu une impulsion de rayonnement gamma.

Le générateur neutronique pulsé G2 émet des neutrons sous forme d'impulsions neutroniques intenses par action d'un faisceau pulsé F2 de deutérium sur une cible de tritium T2. Le générateur neutronique pulsé G2 délivre également un signal impulsionnel électrique S2 qui reproduit la forme temporelle des impulsions neutroniques. Le signal S2 est transmis au circuit électronique de traitement E. Le signal S2 commande le circuit électronique de traitement E afin de prendre en compte et d'identifier les impulsions délivrées par le détecteur D2, d'une part, durant chaque impulsion neutronique intense et, d'autre part, entre deux impulsions neutroniques intenses successives. Le signal S2 commande également le circuit électronique de traitement E afin de prendre en compte les impulsions délivrées par le détecteur D1 uniquement entre les impulsions neutroniques intenses successives. En effet, l'acquisition de signal par la technique de la particule associée ne doit pas se faire pendant l'émission des impulsions neutroniques intenses, car il en résulterait alors une forte dégradation du rapport signal sur bruit.

La base de données $B_0$ stocke les événements EV0 de type inélastique détectés par le détecteur D2, pendant les impulsions neutroniques intenses, sous la forme d'une liste des énergies E0 déposées dans le détecteur D2, lesquelles énergies sont proportionnelles à l'amplitude des impulsions électriques générées par le détecteur D2 sous l'action des rayonnements gamma. Dans la suite de la description, ces énergies seront nommées "énergies des impulsions détectées" dans un but de simplification.

La base de données $B_1$ stocke les événements EV1 de type inélastique et de capture détectés par le détecteur D2, entre les impulsions neutroniques intenses, sous la forme d'une liste des énergies E1 des impulsions qui sont générées par le détecteur D2 sous l'action des rayonnements gamma.

La base de données $B_2$ stocke les événements EV2 de type inélastique et de capture résiduels qui sont détectés, à l'aide de la technique de la particule associée, par le détecteur D1, entre les impulsions neutroniques intenses. Comme cela sera précisé ultérieurement, chaque événement EV2 rassemble un ensemble d'informations, à savoir : une énergie gamma, un temps de coïncidence entre la détection de la particule α et celle du rayonnement γ associé et une information de position de détection de la particule α.

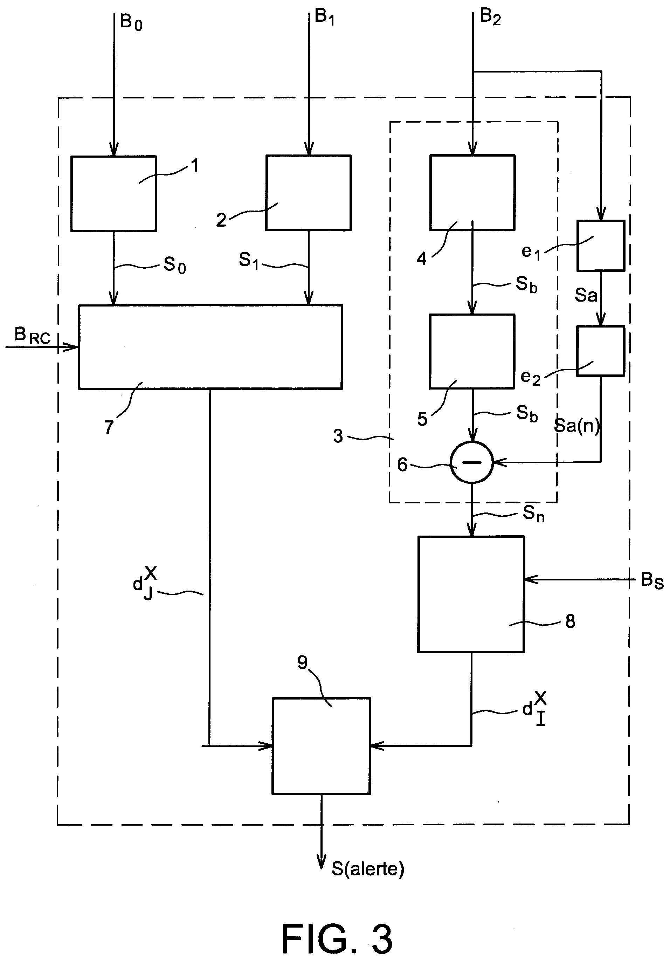

Le calculateur C calcule le signal d'alerte S (alerte) sur la base des données stockées dans les bases de données $B_0$, $B_1$, $B_2$ et de données de référence stockées dans les bases de données $B_{RC}$ et $B_S$ comme cela sera décrit ultérieurement, en référence à la figure 3.

La figure 2 représente l'intensité I des neutrons qui sont émis simultanément par les générateurs neutroniques G1 et G2. Des neutrons sont émis en continu par le tube G1 avec une intensité $I_4$ et des impulsions neutroniques intenses sont émises avec une période T par le générateur neutronique G2. Pendant une impulsion neutronique intense, l'intensité globale des neutrons émis par les tubes G1 et G2 évolue de $I_4$ à $I_2$ pendant une durée T1 (par exemple égale à 1μs),

conserve sensiblement la valeur $I_2$ pendant une durée T2 (par exemple quelques dizaines de microsecondes) et diminue de $I_2$ à $I_4$ pendant une durée T3 sensiblement égale à T1. Ensuite, une durée T4 sépare la fin d'une impulsion neutronique intense du début de l'impulsion neutronique intense suivante. Du fait du caractère simultané de l'émission de neutrons par les tubes G1 et G2, il faut souligner que, contrairement à l'art antérieur connu dans le domaine de l'interrogation neutronique pulsée, le nombre de neutrons émis ne revient pas à zéro entre les impulsions neutroniques intenses mais conserve une valeur non nulle.

Pendant la durée d'émission T2 d'une impulsion neutronique intense et pendant la durée T4 qui sépare deux impulsions neutroniques intenses, le signal de synchronisation S2 place le circuit électronique E en attente de réception de rayonnement gamma provenant du détecteur D2. Si un rayonnement gamma est détecté pendant la phase de durée T2 d'émission neutronique intense, il est dû, de façon la plus probable, aux réactions des neutrons rapides qui induisent un rayonnement gamma de type inélastique et, avec une faible probabilité, aux neutrons thermiques. Si un tel rayonnement est détecté, son énergie est mesurée puis convertie, préférentiellement, sous la forme d'une donnée numérique, par le circuit électronique E. Les données numériques représentatives des énergies ainsi mesurées constituent les événements EV0 (i.e. les énergies E0 des impulsions) qui sont stockés dans la base de données $B_0$. Si un rayonnement gamma est détecté pendant la durée T4 qui sépare deux impulsions neutroniques intenses, il peut provenir d'une réaction de capture ou d'une réaction de type inélastique. L'énergie d'un tel rayonnement est mesurée puis convertie, préférentiellement, sous la forme d'une donnée numérique, par le circuit électronique E. Les données numériques représentatives des énergies ainsi détectées constituent les événements EV1 (i.e. les énergies E1 des impulsions) qui sont stockés dans la base de données $B_1$.

Par ailleurs, dès lors qu'une particule $\alpha$ est détectée pendant la durée T4, le signal S1 place le circuit électronique E en attente d'un rayonnement gamma détecté par le détecteur D1. Si un rayonnement gamma est détecté en coïncidence avec la particule $\alpha$, l'énergie du rayonnement gamma est mesurée puis convertie, préférentiellement sous la forme d'une donnée numérique, par le circuit électronique E. Le circuit électronique E calcule également la durée $T_{\alpha\gamma}$ qui sépare la détection de la particule $\alpha$ de la détection du rayonnement gamma. La base de données $B_2$ stocke les événements EV2 qui sont détectés par le détecteur D1 sous la forme de données numériques. Un événement EV2 rassemble l'énergie E2 du rayonnement gamma détecté, la durée $T_{\alpha\gamma}$ et une information $i_k$ qui identifie la position à laquelle la particule $\alpha$ a été détectée sur le détecteur à localisation L. Une fraction de ces événements correspond à des rayonnements gamma de capture. Cette fraction d'événements est préférentiellement supprimée du spectre gamma correspondant à l'objet observé, comme cela sera décrit ultérieurement en référence à la figure 3.

L'ensemble des mesures effectuées sur une période T (T=T1+T2+T3+T4) constitue un cycle de mesures. Après Nm cycles de mesures, par exemple 600000 cycles de mesure correspondant à une durée totale de mesure d'environ dix minutes, un cycle de traitement est effectué.

La figure 3 représente les différentes étapes mises en oeuvre dans un cycle de traitement de l'invention. Un cycle de traitement est mis en oeuvre par le calculateur C.

Un cycle de traitement comprend tout d'abord un ensemble d'étapes de construction de spectres, à savoir :

- une étape 1 de construction d'un spectre gamma $S_0$ à partir des données stockées dans la base de données $B_0$,
- une étape 2 de construction d'un spectre gamma $S_1$ à partir des données stockées dans la base de données $B_1$, et
- une étape 3 de construction d'un spectre gamma Sn dépourvu de bruit aléatoire à partir des données stockées dans la base de données $B_2$, l'étape 3 étant elle-même constituée d'une étape 4 de sélection des événements stockés dans la base de données $B_2$ pour déterminer, parmi ces événements, ceux qui correspondent à l'objet étudié, d'une étape 5 de construction d'un spectre gamma brut Sb de l'objet étudié à partir des événements sélectionnés à l'issue de l'étape 4, d'une succession d'étapes e1, e2 pour former un spectre de bruit aléatoire normalisé Sa(n) à partir des événements stockés dans la base de données $B_2$ et d'une étape 6 de soustraction du spectre gamma brut Sb et du spectre de bruit aléatoire normalisé Sa(n) pour former le spectre Sn dépourvu de bruit aléatoire qui ne comprend alors que les événements de type inélastique induits par les neutrons rapides dans l'objet étudié.

Les étapes 1, 2 et 3 de construction de spectres sont suivies d'étapes de traitement de spectres, à savoir :

- une étape 7 de recherche d'élément(s) chimique(s) à partir des spectres $S_0$ et $S_1$, et
- une étape 8 de recherche(s) d'élément(s) chimique(s) à partir du spectre Sn.

Les étapes 7 et 8 de traitement de spectres sont, quant à elles, suivies d'une étape de prise de décision 9.

Par étape de construction de spectre à partir de données stockées, il faut entendre une étape, connue en soi, de construction des histogrammes des énergies des événements associés à ces données.

L'étape 3 de construction du spectre Sn dépourvu de bruit aléatoire à partir des données stockées dans la base de données $B_2$ va maintenant être décrite.

Les événements de type inélastique et de capture EV2 qui sont stockés dans la base de données $B_2$ ne sont

constitués que d'événements qui se produisent entre les impulsions neutroniques. Le circuit électronique E comprend, à cette fin, des moyens qui sélectionnent, sur la base du signal S2 qui provient du générateur pulsé G2, les événements détectés par le détecteur D1 dans les plages temporelles souhaitées.

Comme cela a été mentionné plus haut, l'étape 3 comprend une étape 4 de sélection des événements stockés dans la base de données $B_2$. L'étape 4 de sélection des événements stockés dans la base de données $B_2$ repose sur la technique connue de la particule associée. Cette étape est une étape connue en soi qui permet de déterminer, parmi tous les événements de la base $B_2$, ceux qui concernent l'objet étudié.

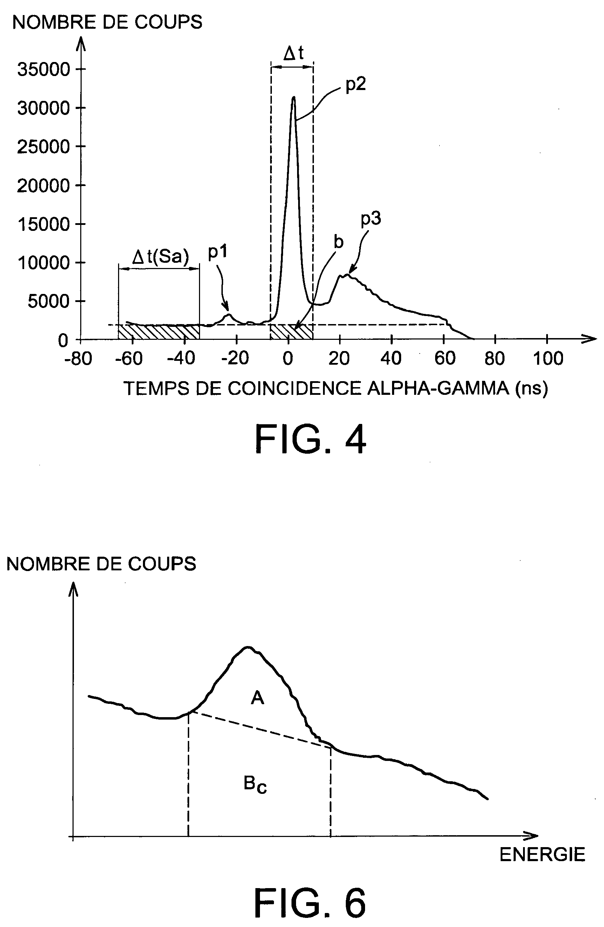

A partir des événements ainsi sélectionnés à l'étape 4, on construit le spectre gamma brut de l'objet étudié Sb lors de l'étape 5. L'étape 5 est une étape connue en soi, à l'image des étapes 1 et 2 mentionnées précédemment. A l'étape 5 succède une étape 6 qui soustrait du spectre Sb le spectre de bruit aléatoire normalisé Sa(n). Le spectre de bruit aléatoire normalisé Sa(n) est construit par les étapes successives e1 et e2, à partir de données spectrales stockées dans la base B2. Un spectre de bruit aléatoire Sa est tout d'abord formé à partir des données spectrales stockées dans la base $B_2$ (étape e1) et le spectre de bruit aléatoire normalisé Sa(n) est alors formé à partir du spectre de bruit aléatoire Sa (étape e2). La formation du spectre de bruit aléatoire normalisé Sa(n) est précisée ci-dessous en référence à la figure 4.

La figure 4 représente un exemple de spectre temporel obtenu à l'aide de la technique de la particule associée. Ce spectre représente les temps séparant la détection de la particule alpha et du rayonnement gamma, temps à partir desquels on peut déduire les temps de vol neutroniques. Le spectre de la figure 4 comprend, à titre d'exemple, un niveau de bruit b représentatif du niveau des coïncidences fortuites, niveau au-dessus duquel se dessinent un pic p1 de très faible amplitude qui correspond aux photons induits dans le générateur G1, un pic p2 de forte amplitude qui représente les coïncidences vraies de l'objet étudié et un pic p3 d'amplitude moyenne qui représente les événements ne correspondant pas à l'objet étudié. La largeur temporelle $\Delta t$ du pic p2 est la plage temporelle relative à l'objet étudié. L'étape e1 consiste, par exemple, à sélectionner les événements du spectre temporel dans une plage temporelle $\Delta t(Sa)$ négative par rapport à la plage temporelle relative à l'objet étudié et disjointe de la plage temporelle relative à l'objet étudié, puis à construire le spectre Sa de bruit de fond aléatoire dû aux coïncidences fortuites à partir des événements ainsi sélectionnés. La durée $\Delta t(Sa)$ est préférentiellement supérieure ou égale à la plage temporelle $\Delta t$ de l'objet étudié afin d'obtenir une meilleure précision statistique. L'étape e2 consiste ensuite à normaliser le spectre Sa à la largeur $\Delta t$ de la plage temporelle de l'objet étudié. Le facteur de normalisation est égal à $\Delta t/\Delta t(Sa)$.

Le spectre normalisé Sa(n) délivré à l'issue de l'étape e2 est alors retranché du spectre brut Sb à l'étape 6. Il en résulte le spectre gamma dépourvu de bruit aléatoire Sn de l'objet étudié. La présence d'élément(s) chimique(s) est alors recherchée, à partir du spectre Sn, à l'aide d'un algorithme de traitement qui est mis en oeuvre, de façon connue en soi, par l'étape 8 (cf. figure 3). La recherche d'élément(s) chimique(s) est effectuée à l'aide de données de référence répertoriées dans une liste préétablie contenue dans une base de données Bs. La base de données Bs contient des données de spectre complet pour chacun des éléments chimiques susceptibles d'être détectés. La résolution en énergie du détecteur D1 ne permet pas un traitement par raie contrairement au détecteur D2. L'étape 8 met donc en oeuvre une déconvolution de l'ensemble du spectre Sn pour extraire la contribution relative de chaque élément présent. La déconvolution est réalisée par un algorithme d'ajustement à l'aide des données contenues dans la base Bs. La fraction d'événements dans Sn associée à un élément X est ensuite normalisée au nombre total de coups dans Sn. On calcule alors le pourcentage $F_X$ de l'élément X dans le spectre complet avec la variance $\sigma(F_X)$ qui lui est associée. Un élément X est considéré comme détecté si, par exemple, l'inéquation suivante est vérifiée :

$$\sigma(F_X)\,/\;F_X\;<\;50\%$$

L'étape 7 (cf. figure 3) de recherche d'élément(s) chimique(s) à partir des spectres $S_0$ et $S_1$ est effectuée à l'aide d'un algorithme de traitement A1.

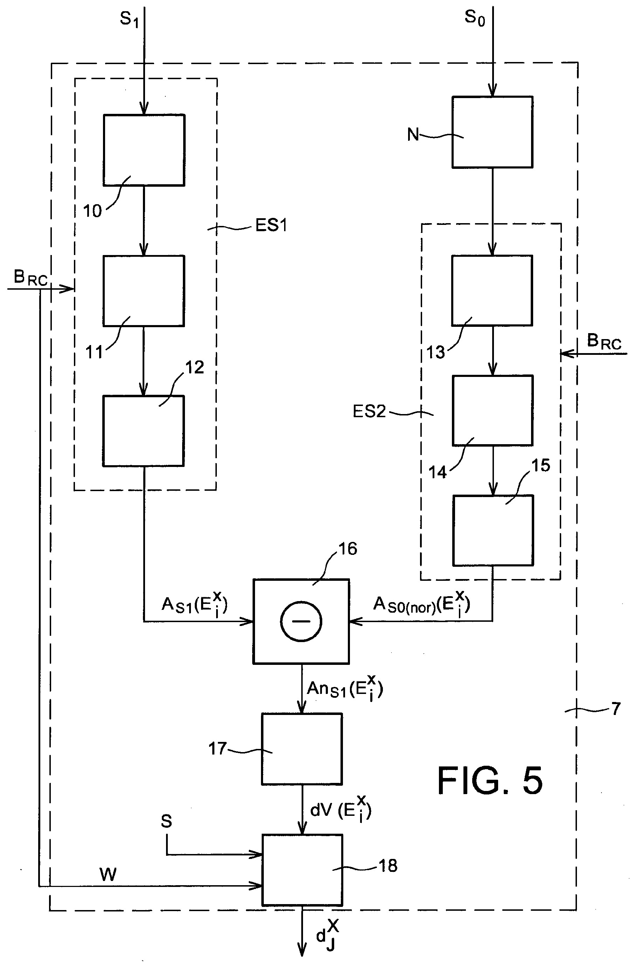

La figure 5 illustre les étapes élémentaires mises en oeuvre par l'algorithme A1. L'algorithme A1 détermine la présence d'éléments chimiques qui correspondent à des raies gamma répertoriées dans la base de données de référence $B_{RC}$. L'algorithme A1 inclut la recherche d'interférences possibles des rayonnements de type inélastique via l'analyse du spectre $S_0$.

De façon connue en soi, tout élément X recherché est caractérisé par un ensemble de n raies gamma de capture d'énergies $E1^x$, $E2^x$, ..., $En^x$ caractéristiques des isotopes naturels de l'élément X. Dans le cadre de l'invention, il existe un risque d'interférence des raies de capture qui correspondent à des éléments recherchés avec des raies de capture d'éléments autres que les éléments recherchés ou avec des raies de type inélastique dues à l'émission résiduelle du générateur G1 entre les impulsions intenses délivrées par le générateur G2. L'algorithme A1 a pour but de sélectionner, dans une liste de raies associées à chaque élément X d'intérêt, celles présentant une intensité suffisante et un risque d'interférence faible.

L'algorithme A1 comprend une étape ES1 de traitement du spectre $S_1$, une étape N de normalisation du spectre

$S_0$, une étape ES2 de traitement du spectre $S_0$ normalisé, une étape de soustraction 16 qui soustrait le résultat de l'étape de traitement ES2 du résultat de l'étape de traitement ES1, une étape 17 de validation de raie et une étape 18 de détermination de présence d'un élément.

L'étape de traitement ES1 comprend, successivement, une étape 10 de recherche de pics, une étape 11 d'extraction d'aires nettes et une étape 12 de validation de détection de raies. Chacune de ces étapes est une étape connue en soi. L'étape 10 de recherche de pics est suivie, pour chaque pic détecté, d'une étape 11 d'extraction de l'aire nette A du pic. La figure 6 représente un pic de spectre gamma. L'aire nette A du pic représenté en figure 6 est la surface du pic qui dépasse le niveau de bruit de fond Compton Bc. Une raie $E^X_i$ d'un élément X est considérée comme détectée dans le spectre si l'aire nette $A_{S1}(E^X_i)$ de la raie $E^X_i$ vérifie, par exemple, l'équation :

$$\sigma[A_{S1}(E^X_i)]/A_{S1}(E^X_i) < 50\%,$$

avec $\sigma[A_{S1}(E^X_i)] = [A_{S1}(E^X_i)+2Bc_{S1}(E^X_i)]^{1/2}$, $Bc_{S1}(E^X_i)$ étant le bruit de fond Compton associé à la raie $E^X_i$.

Ce critère correspond approximativement à un niveau de confiance de 95% et peut être ajusté en fonction du taux de fausse alarme souhaité.

L'étape de normalisation N a pour but de supprimer les composantes indésirables que contient le spectre $S_0$. Ces composantes indésirables sont des pics correspondant à des rayonnements de type inélastique dus à l'émission résiduelle du générateur G2 entre les impulsions intenses, pics situés à une proximité telle d'une des raies de capture $E1^X$, $E2^X$, ..., $En^X$ d'un élément recherché que le pouvoir de séparation en énergie du détecteur D2 ne permet pas de distinguer la raie inélastique de la raie de capture. L'étape de normalisation N comprend le calcul d'un facteur de normalisation F. Le facteur de normalisation F est sensiblement proportionnel au nombre de neutrons d'intensité $I_4$ émis pendant la durée T4 qui sépare deux impulsions et sensiblement inversement proportionnel au nombre de neutrons émis pendant la durée T2 d'une impulsion neutronique d'intensité $I_2$.

Le facteur F peut ainsi être, par exemple, donné par l'équation :

$$F = (I_4 x T_4)/(I_2 x T2) x [(1-TM(T_4))/(1-TM(T_2))],$$

où TM(T4) et TM(T2) sont, respectivement, un temps mort de l'électronique de traitement E qui traite les signaux électriques issus de la détection des rayonnements gamma détectés pendant les durées T4 et un temps mort de l'électronique de traitement E qui traite les signaux électriques issus de la détection des rayonnements gamma détectés pendant les durées T2.

Le facteur F peut également être obtenu de façon empirique en mesurant, lors d'une phase d'étalonnage réalisée dans des conditions similaires à celles d'une mesure d'inspection, pendant les durées T2 et T4, les intensités de raies gamma de type inélastique. Les raies gamma utilisées pour le calcul du facteur F sont alors précisément choisies pour leur intensité, pour leur énergie et parce qu'elles ne présentent pas d'interférence connue avec des rayonnements de capture. Le spectre gamma normalisé $S_0(n)$ est alors formé en multipliant le nombre de coups présent dans chaque canal d'énergie du spectre gamma $S_0$ par le facteur F.

L'étape de traitement ES2 succède à l'étape N de normalisation. L'étape de traitement ES2 comprend, de façon connue en soi, une recherche des pics présents dans le spectre normalisé $S_0(n)$ (étape 13), une extraction des aires nettes $A_{S0(nor)}(E^X_i)$ des pics du spectre normalisé (étape 14) et une étape de validation de détection de raie (étape 15). De chaque aire nette de capture $A_{S1}(E^X_i)$ de raie $E^X_i$ délivrée suite de l'étape 12, on soustrait, à l'étape 16, l'aire nette normalisée délivrée suite à l'étape 15. Dans le cas où il n'y a pas de pic détecté à l'étape 13 (ce qui est le cas le plus fréquent), l'aire nette normalisée $A_{S0(nor)}(E^X_i)$ relative à l'énergie $E^X_i$ est définie comme étant égale à zéro. A l'issue de l'étape 16, on obtient alors une aire nette $An_{S1}(E^X_i)$ dépourvue des contributions de type inélastique, à savoir :

$$An_{S1}(E^X_i) = A_{S1}(E^X_i) - A_{S0(nor)}(E^X_i).$$

La raie de capture d'un élément X est confirmée à l'étape 17, si la relation suivante est, par exemple, vérifiée :

$$\sigma[An_{S1}(E^X_i)]/An_{S1}(E^X_i) < 50\%,$$

avec :

$$\sigma[An_{S1}(E^X_i)]^2 = \sigma[A_{S1}(E^X_i)]^2 + \sigma[A_{S0(nor)}(E^X_i)]^2 = [A_{S1}(E^X_i) + 2Bc_{S1}(E^X_i)] + F^2[A_{S0}(E^X_i)$$

$$+ 2Bc_{S0}(E^X_i)]$$

La base de données $B_{RC}$ comprend des données de poids W relatives à chaque raie susceptible d'être détectée. La donnée de poids W d'une raie d'un élément X est fonction de la probabilité qu'a la raie d'être détectée, du risque d'interférence de la raie avec des raies identiques provenant d'éléments autres que l'élément X et du nombre total de raies qui correspondent à l'élément X. La somme des poids de toutes les raies d'un même élément est égale à 1. Sur la base des informations de poids W stockées dans la base $B_{RC}$ et de l'information de validation $dV(E^X_i)$ délivrée, à l'issue de l'étape 17, pour chaque raie de capture d'énergie $E^X_i$, l'étape 18 calcule la somme pondérée des poids des raies détectées pour l'élément X. Le fait d'exploiter plusieurs raies, et donc de ne pas se contenter de la raie la plus intense, permet de limiter le risque que la raie la plus intense provienne en fait d'un élément non recherché, dont il n'a pas été prévu la possible interférence avec cette raie. Les autres raies attendues pour l'élément X, bien que potentiellement moins intenses, permettent donc de confirmer la présence de l'élément. La raie la plus intense possède, en principe, le poids W le plus élevé, sauf si elle est sujette à une possible interférence connue avec un élément non recherché souvent présent dans les objets interrogés ou leur environnement. La définition du poids de chaque raie $E1^X$, $E2^X$, ..., $En^X$ d'un élément recherché résulte donc d'un compromis entre sensibilité de détection et risque d'interférence. Un élément X est considéré comme détecté si la somme des poids des raies détectées calculée est supérieure à un seuil ajustable S, par exemple égal à 0,5. Une donnée binaire $d_J^X$ est délivrée à l'issue de l'étape 18 pour traduire s'il y a détection ou non détection de l'élément X.

L'étape 9 (cf. figure 3) est une étape de décision qui est mise en oeuvre, à l'aide d'un algorithme A4, à partir des données $d_I^X$ et $d_J^X$ délivrées à l'issue des étapes respectives 8 et 7. Un signal d'alerte S(alerte) est délivré à l'issue de l'étape de décision si l'une ou l'autre des données $d_I^x$ et $d_J^x$ confirme la présence de l'élément chimique X. L'étape de décision délivre un signal d'absence de l'élément chimique si aucune des données aptes à confirmer ou infirmer la présence de l'élément chimique ne confirme sa présence. Pour certaines substances illicites, ce sont les proportions de certains éléments chimiques qui permettent d'exclure la présence de ces substances. A cette fin, selon un perfectionnement du procédé de l'invention, il est prévu un calcul de proportions relatives de certains éléments chimiques détectés, par exemple les proportions relatives de Carbone (C), Azote (N) et Oxygène (O), pour différentier drogues et explosifs des substances inoffensives qui contiennent également ces éléments chimiques.

## Revendications

**1.** Procédé de détection de présence d'un élément chimique (X) dans un objet par émission de neutrons sur l'objet, **caractérisé en ce que** l'émission de neutrons sur l'objet est constituée, d'une part, par une émission continue de neutrons provenant d'un générateur neutronique à particule associée (G1) et, d'autre part, par une émission d'impulsions neutroniques qui se superposent à l'émission continue de neutrons, les impulsions neutroniques provenant d'un générateur neutronique pulsé (G2) qui génère des impulsions neutroniques de durée d'impulsion T2, deux impulsions neutroniques successives étant séparées d'une durée T4, les émissions continue et pulsée de neutrons sur l'objet produisant un rayonnement gamma de capture et un rayonnement gamma de type inélastique, le procédé comprenant une détection du rayonnement gamma de type inélastique et du rayonnement gamma de capture.

**2.** Procédé selon la revendication 1, dans lequel la détection du rayonnement gamma de type inélastique et du rayonnement gamma de capture est réalisée à l'aide de la technique de la particule associée, pendant les durées T4 qui séparent les impulsions de durées T2 et en ce qu'il comprend en outre:

- une formation (4, 5), dans une plage de temps de vol neutronique relative à l'objet, d'un premier spectre gamma ($S_b$) à partir du rayonnement gamma de type inélastique et du rayonnement gamma de capture détectés à l'étape de détection à l'aide de la technique de la particule associée,
- une formation ($e_1$), dans une plage temporelle disjointe de la plage de temps de vol neutronique relative à l'objet ou de toute autre plage de temps de vol neutronique relative à tout autre objet susceptible d'environner l'objet, d'un spectre de bruit de fond aléatoire (Sa) relatif aux coïncidences fortuites, à partir du rayonnement gamma de type inélastique et du rayonnement gamma de capture détectés à l'étape de détection à l'aide de la technique de la particule associée (4),
- une formation (e2), à partir du spectre de bruit de fond aléatoire relatif aux coïncidences fortuites (Sa), d'un spectre de bruit de fond aléatoire normalisé (Sa(n)) sur la plage temporelle relative à l'objet,
- une soustraction (6) du premier spectre gamma ($S_b$) et du spectre de bruit de fond aléatoire normalisé (Sa(n)) pour former un deuxième spectre gamma ($S_n$), et

- une étape de recherche (8) de la présence d'un élément chimique dans l'objet à partir du deuxième spectre gamma ($S_n$) et de spectres d'éléments chimiques de référence susceptibles d'être détectés ($B_s$) pour délivrer une première donnée ($d_l^X$) apte à traduire la présence ou l'absence de l'élément chimique (X) dans l'objet.

**3.** Procédé selon la revendication 2, **caractérisé en ce qu'**il comprend, en outre:

- une détection, à l'aide de la technique d'interrogation neutronique pulsée, du rayonnement gamma de capture et du rayonnement gamma de type inélastique, d'une part pendant les durées d'impulsions T2 et, d'autre part, pendant les durées T4 qui séparent les impulsions de durée T2.
- une formation (2) d'un troisième spectre gamma ($S_1$), à partir du rayonnement gamma de capture et du rayonnement gamma de type inélastique détectés, pendant les durées T4, à l'aide de la technique d'interrogation neutronique pulsée,
- une formation (ES1), à partir du troisième spectre gamma ($S_1$), d'une première donnée ($A_{S1}(E_i^X)$) représentative d'au moins une raie de capture ($E_1^X$, $E_2^X$, ..., $E_n^X$) de l'élément chimique (X),
- une formation (1) d'un quatrième spectre gamma ($S_0$) constitué d'une pluralité de canaux d'énergie, à partir du rayonnement de type inélastique détecté pendant les durées d'impulsion T2, à l'aide de la technique d'interrogation neutronique pulsée,
- une formation (N) d'un spectre gamma normalisé ($S_{(nor)}$) à partir du quatrième spectre gamma ($S_0$), la formation du spectre gamma normalisé ($S_{0(nor)}$) étant effectuée en multipliant le contenu de chaque canal d'énergie du quatrième spectre gamma par un facteur de normalisation (F) sensiblement proportionnel au nombre de neutrons émis pendant une durée T4 et sensiblement inversement proportionnel au nombre de neutrons émis pendant une durée T2,
- une formation (ES2), à partir du spectre gamma normalisé ($S_{0(nor)}$), d'une deuxième donnée ($A_{S0(nor)}(E^X_i)$) représentative d'un bruit de fond de rayonnement gamma de type inélastique,
- une étape de soustraction (16) de la première donnée ($A_{S1}(E^X_i)$) et de la deuxième donnée ($A_{s0nor}(E_i^X)$),
- une étape de validation (17) de la présence ou de l'absence de l'élément chimique (X) dans l'objet en fonction du résultat de l'étape de soustraction, et
- si la présence de l'élément chimique (X) est validée dans l'objet, une étape supplémentaire (18) qui délivre une deuxième donnée ($d_J^X$) apte à confirmer ou infirmer la validation de la présence de l'élément chimique (X) sur la base du résultat de l'étape de validation (17) et de données de poids ($W(E1^X)$, $W(E2^X)$, ..., $W(En^X)$) relatives aux différentes raies gamma de rayonnement de capture de l'élément chimique (X), ces poids étant attribués en fonction d'une probabilité de détection et d'un risque d'interférence associés à chaque raie.

**4.** Procédé selon la revendication 3, dans lequel le facteur de normalisation (F) est donné par l'équation :

$$F = (I_4 \times T4)/(I_2 \times T2) \times [(1 - TM(T4))/(1 - TM(T2))],$$

où TM(T4) et TM(T2) sont, respectivement, un temps mort d'une électronique de traitement (E) qui traite les signaux électriques issus de la détection des rayonnements gamma pendant les durées T4 et un temps mort d'une électronique de traitement (E) qui traite les signaux électriques issus de la détection des rayonnements gamma détectés pendant les durées T2.

**5.** Procédé selon la revendication 3 ou 4, dans lequel une étape de décision (9) délivre un signal d'alerte (S(alerte)) si la première donnée ($d_l^x$) ou la deuxième donnée ($d_J^x$) confirme la présence de l'élément chimique.

**6.** Procédé selon la revendication 5, dans lequel, dès lors que la présence de plusieurs éléments chimiques est confirmée, il comprend une étape supplémentaire de calcul de proportions relatives de tout ou partie des éléments chimiques dont la présence est confirmée.

**7.** Procédé selon l'une quelconque des revendications 2 à 6, dans lequel la détection, à l'aide de la technique de la particule associée, du rayonnement gamma de capture et du rayonnement gamma de type inélastique pendant les durées T4 qui séparent les impulsions de durée T2 est effectuée par un détecteur (D1) préférentiellement adapté pour la détection de rayonnement gamma de type inélastique.

**8.** Procédé selon l'une quelconque des revendications 3 à 7, dans lequel la détection, à l'aide de la technique d'interrogation neutronique pulsée, du rayonnement gamma de capture et du rayonnement gamma de type inélastique, d'une part, pendant les durées d'impulsion T2 et, d'autre part, pendant les durées T4 qui séparent les impulsions de durée T2 est effectuée par un détecteur (D2) préférentiellement adapté pour la détection de rayonnement gamma de capture.

**Patentansprüche**

1. Verfahren zur Erfassung des Vorhandenseins eines chemischen Elements (X) in einem Objekt durch Emission von Neutronen auf das Objekt, **dadurch gekennzeichnet, dass** die Emission von Neutronen auf das Objekt einerseits eine kontinuierliche Emission von Neutronen aus einem Neutronengenerator mit zugeordnetem Partikel (G1) umfasst, und andererseits eine Emission von Neutronenpulsen, die sich der kontinuierlichen Emission von Neutronen überlagern, wobei die Neutronenpulse von einem gepulsten Neutronengenerator (G2) stammen, der Neutronenpulse der Pulsdauer T2 generiert, wobei zwei aufeinander folgende Neutronenpulse um eine Dauer T4 separiert sind, wobei die kontinuierlichen und die gepulsten Emissionen von Neutronen auf das Objekt eine Gamma-Einfangstrahlung und eine Gammastrahlung vom inelastischen Typ erzeugen, wobei das Verfahren eine Erfassung der Gammastrahlung vom inelastischen Typ und der Gamma-Einfangstrahlung umfasst.

2. Verfahren nach Anspruch 1, bei dem die Erfassung der Gammastrahlung vom inelastischen Typ und der Gamma-Einfangstrahlung mit Hilfe der Technik des zugeordneten Partikels während der Dauern T4 durchgeführt wird, die die Pulse der Dauer T2 separieren, und dass es ferner umfasst:

   - eine Bildung (4,5), in einem Zeitbereich des Neutronenflugs relativ zu dem Objekt, eines ersten Gammaspektrums ($S_b$) ausgehend von der Gammastrahlung vom inelastischen Typ und der Gamma-Einfangstrahlung, die im Schritt der Erfassung mit Hilfe der Technik des zugeordneten Partikels erfasst werden,
   - eine Bildung ($e_1$), in einem Zeitbereich, der getrennt ist von dem Zeitbereich des Neutronenflugs relativ zu dem Objekt oder von jedem anderem Zeitbereich des Neutronenflugs relativ zu einem anderen Objekt, das das Objekt umgeben kann, eines Spektrums des Zufallshintergrundrauschens (Sa) in Verbindung mit zufälligen Ereignissen, ausgehend von der Gammastrahlung vom inelastischen Typ und der Gamma-Einfangstrahlung, die im Schritt der Erfassung mit Hilfe der Technik des zugeordneten Partikels (4) erfasst werden,
   - eine Bildung (e2), ausgehend vom dem Spektrum des Zufallshintergrundrauschens mit Bezug zu zufälligen Ereignissen (Sa), eines Spektrums des Zufallshintergrundrauschens (Sa (n)), das über den Zeitbereich relativ zu dem Objekt normiert ist,
   - eine Subtraktion (6) des ersten Gammaspektrums ($S_b$) und des normierten Spektrums des Zufallshintergrundrauschens (Sa (n)), um ein zweites Gammaspektrum ($S_n$) zu bilden, und
   - einen Schritt der Suche (8) nach dem Vorhandensein eines chemischen Elements in dem Objekt ausgehend von dem zweiten Gammaspektrum ($S_n$) und von Spektren von chemischen Referenzelementen, die erfasst werden können ($B_S$), um einen ersten Datensatz ($d_l{}^X$) zu liefern, der dazu ausgelegt ist, das Vorhandensein oder das Fehlen des chemischen Elements (X) in dem Objekt auszudrücken.

3. Verfahren nach Anspruch 2, **dadurch gekennzeichnet, dass** es ferner umfasst:

   - eine Erfassung, mit Hilfe der Technik der gepulsten Neutronenabfrage, der Gamma-Einfangstrahlung und der Gammastrahlung vom inelastischen Typ einerseits während der Pulsdauern T2 und andererseits während der Dauern T4, die die Pulse der Dauer T2 separieren,
   - eine Bildung (2) eines dritten Gammaspektrums ($S_1$) ausgehend von der erfassten Gamma-Einfangstrahlung und der erfassten Gammastrahlung vom inelastischen Typ während der Dauern T4 mit Hilfe der Technik der gepulsten Neutronenabfrage,
   - eine Bildung (ES1), ausgehend vom dem dritten Gammaspektrum ($S_1$), eines ersten Datensatzes ($A_{S_1}(E_i{}^x)$), der repräsentativ ist für wenigstens eine Einfanglinie ($E1^x$, $E_2{}^x$, ..., $E_n{}^x$) des chemischen Elements (X),
   - eine Bildung (1) eines vierten Gammaspektrums ($S_0$), das durch eine Mehrzahl von Energiekanälen gebildet ist, ausgehend von der Strahlung vom inelastischen Typ, die während der Pulsdauern T2 erfasst wird, mit Hilfe der Technik der gepulsten Neutronenabfrage,
   - eine Bildung (N) eines normierten Gammaspektrums ($S_{(nor)}$) ausgehend vom dem vierten Gammaspektrum ($S_0$), wobei die Bildung des normierten Gammaspektrums ($S_{0(nor)}$) durchgeführt wird, indem man den Inhalt jedes Energiekanals des vierten Gammaspektrums mit einem Normierungsfaktor (F) multipliziert, der im Wesentlichen proportional ist zur Zahl von Neutronen, die während einer Dauer T4 emittiert werden, und im Wesentlichen umgekehrt proportional zur Zahl von Neutronen, die während einer Dauer T2 emittiert werden,
   - eine Bildung (ES2), ausgehend von dem normierten Gammaspektrum ($S_{0(nor)}$), eines zweiten Datensatzes

$(A_{s0(nor)} (E^x_i))$, der repräsentativ ist für ein Hintergrundrauschen von Gammastrahlung vom inelastischen Typ,

- einen Schritt der Subtraktion (16) des ersten Datensatzes $(A_{s1} (E^x_i))$ und des zweiten Datensatzes $(A_{s0nor}(E^x_i))$,
- einen Schritt der Validierung (17) des Vorhandenseins oder des Fehlens des chemischen Elements (X) in dem Objekt als Funktion des Ergebnisses des Subtraktionsschritts, und
- wenn das Vorhandensein des chemischen Elements (X) in dem Objekt validiert wird, einen zusätzlichen Schritt (18), der einen zweiten Datensatz $(d_J^X)$ liefert, der dazu ausgelegt ist, die Validierung des Vorhandenseins des chemischen Elements (X) zu bestätigen oder zu widerlegen auf der Basis des Ergebnisses des Validierungsschritts (17) und von Gewichtungsdaten $(W (E1^x), W (E2^x), ... W (En^x))$ bezüglich der verschiedenen Gammalinien der Einfangstrahlung des chemischen Elements (X), wobei diese Gewichte als Funktion einer Erfassungswahrscheinlichkeit und eines Interferenzrisikos zugewiesen werden, die jeder Linie zugeordnet sind.

4. Verfahren nach Anspruch 3, bei dem der Normierungsfaktor (F) gegeben ist durch die Gleichung:

$$F = (I_4 \times T4) / (I_2 \times T2) \times [(1-TM (T4)) / (1-TM (T2))],$$

wobei TM (T4) und TM (T2) eine Totzeit einer Verarbeitungselektronik (E), die die elektrischen Signale aus der Erfassung der Gammastrahlungen während der Dauern T4 verarbeitet, beziehungsweise eine Totzeit einer Verarbeitungselektronik (E) sind, die die elektrischen Signale aus der Erfassung der Gammastrahlungen verarbeitet, die während der Dauern T2 erfasst werden.

5. Verfahren nach Anspruch 3 oder 4, bei dem ein Entscheidungsschritt (9) ein Warnsignal (S (Warn)) liefert, wenn der erste Datensatz $(d_I^X)$ oder der zweite Datensatz $(d_J^X)$ das Vorhandensein des chemischen Elements bestätigt.

6. Verfahren nach Anspruch 5, bei dem, sobald das Vorhandensein von mehreren chemischen Elementen bestätigt wird, ein zusätzlicher Schritt der Berechnung von relativen Anteilen aller oder eines Teils der chemischen Elemente enthalten ist, deren Vorhandensein bestätigt ist.

7. Verfahren nach einem der Ansprüche 2 bis 6, bei dem die Erfassung, mit Hilfe der Technik des zugeordneten Partikels, der Gamma-Einfangstrahlung und der Gammastrahlung vom inelastischen Typ während der Dauern T4, die die Pulse der Dauer T2 separieren, mittels eines Detektors (D1) durchgeführt wird, der vorzugsweise für die Erfassung von Gammastrahlung vom inelastischen Typ ausgelegt ist.

8. Verfahren nach einem der Ansprüche 3 bis 7, bei dem die Erfassung, mit Hilfe der Technik der gepulsten Neutronenabfrage, der Gamma-Einfangstrahlung und der Gammastrahlung vom inelastischen Typ einerseits während der Pulsdauern T2 und andererseits während der Dauern T4, die die Pulse der Dauer T2 separieren, mittels eines Detektors (D2) durchgeführt wird, der vorzugsweise für die Erfassung von Gamma-Einfangstrahlung ausgelegt ist.

**Claims**

1. A method for detecting the presence of a chemical element (X) in an object by emission of neutrons on to the object, **characterised in that** the emission of neutrons on to the object is constituted, firstly, by a continuous emission of neutrons originating from an associated particle neutron generator (G1) and, secondly, by an emission of neutron pulses which are superimposed on the continuous emission of neutrons, where the neutron pulses originate from a pulsed neutron generator (G2) which generates neutron pulses of pulse duration T2, where two successive neutron pulses are separated by a duration T4, and where the continuous and pulsed emissions of neutrons on to the object produce a gamma capture radiation and an inelastic gamma radiation, the method comprising a detection of the inelastic gamma radiation and of the capture gamma radiation.

2. A method according to claim 1, wherein the detection of the inelastic gamma radiation and of the capture gamma radiation is performed using the associated particle technique, during the T4 durations separating the pulses of duration T2, and in that it further comprises:

- formation (4, 5), in a neutron flight time span relative to the object, of a first gamma spectrum $(S_b)$ on the basis of the inelastic gamma radiation and of the capture gamma radiation detected in the detection step using the associated particle technique,

- formation ($e_1$), in a time span separated from the neutron flight time span relative to the object or any other neutron flight time span relative to any other object likely to be in the vicinity of the object, of a random background noise spectrum (Sa) relative to the fortuitous coincidences, on the basis of the inelastic gamma radiation and of the capture gamma radiation detected in the detection step using the associated particle technique (4),
- formation (e2), on the basis of the random background noise spectrum relative to the fortuitous coincidences (Sa), of a standardised random background noise spectrum (Sa(n)) over the time span relative to the object,
- subtraction (6) of the first gamma spectrum ($S_b$) and of the standardised random background noise spectrum (Sa(n)) to form a second gamma spectrum ($S_n$), and
- a step of searching (8) for the presence of a chemical element in the object on the basis of the second gamma spectrum ($S_n$) and of spectra of chemical elements of reference which may be detected ($B_S$) in order to deliver a first data item ($d_I{}^X$) able to reveal the presence or absence of the chemical element (X) in the object.

3. A method according to claim 2, **characterised in that** it includes, in addition:

- detection, using the pulsed neutron interrogation technique, of the capture gamma radiation and of the inelastic gamma radiation, firstly during the T2 pulse durations, and secondly during the T4 durations separating the pulses of duration T2.
- formation (2) of a third gamma spectrum ($S_1$), on the basis of the detected gamma capture radiation and inelastic gamma radiation, during the T4 durations, using the pulsed neutron interrogation technique,
- formation (ES1), on the basis of the third gamma spectrum ($S_1$), of a first data item ($A_{s1}(E^X{}_i)$) representative of at least one capture line ($E_1{}^X$, $E_2{}^X$, ..., $E_n{}^X$) of the chemical element (X),
- formation (1) of a fourth gamma spectrum ($S_0$) consisting of multiple energy channels, on the basis of the inelastic radiation detected during the T2 pulse durations, using the pulsed neutron interrogation technique,
- formation (N) of a standardised gamma spectrum ($S_{(nor)}$) on the basis of the fourth gamma spectrum ($S_0$), where the standardised gamma spectrum ($S_{0(nor)}$) is formed by multiplying the content of each energy channel of the fourth gamma spectrum by a standardisation factor (F) roughly proportional to the number of neutrons emitted during a T4 duration, and roughly inversely proportional to the number of neutrons emitted during a T2 duration,
- formation (ES2), on the basis of the standardised gamma spectrum ($S_{0(nor)}$), of a second data item ($A_{s0(nor)}(E^X{}_i)$) representing an inelastic gamma radiation background noise,
- a step of subtraction (16) of the first data item ($A_{s1(nor)}(E^X{}_i)$) and of the second data item ($A_{s0nor}(E^X{}_i)$),
- a step of validation (17) of the presence or absence of the chemical element (X) in the object according to the results of the subtraction step, and
- if the presence of the chemical element (X) is validated in the object, an additional step (18) which delivers a second data item ($d_J{}^X$) able to confirm or refute the validation of the presence of the chemical element (X) on the basis of the result of the validation step (17) and of weight data ($W(E1^X)$, $W(E2^X)$..., $W(En^X)$) relative to the various capture radiation gamma lines of the chemical element (X), where these weights are attributed according to a probability of detection and a risk of interference associated with each line.

4. A method according to claim 3, in which the standardisation factor (F) is given by the following equation:

$$F = (I_4 xT4)/(I_2 xT2) x [(1-TM(T4))/(1-TM(T2))],$$

where TM(T4) and TM(T2) are, respectively, an idle time of an electronic processing unit (E) which process the electrical signals resulting from the detection of the gamma radiation during the T4 durations, and an idle time of an electronic processing unit (E) which process the electrical signals resulting from the detection of the gamma radiation detected during the T2 durations.

5. A method according to claim 3 or 4, in which a decision-making step (9) delivers an alert signal (S(alerte)) if the first data item ($d_I{}^X$) or the second data item ($d_J{}^X$) confirms the presence of the chemical element.

6. A method according to claim 5, in which, if the presence of several chemical elements is confirmed it includes an additional step of calculation of relative proportions of all or part of the chemical elements the presence of which is confirmed.

7. A method according to any of the claims 2 to 6, in which the detection, using the associated particle technique, of the capture gamma radiation and of the inelastic gamma radiation during the T4 durations separating the pulses of duration T2 is undertaken by a detector (D1) which is preferentially adapted for the detection of inelastic gamma radiation.

8. A method according to any of the claims 3 to 7, in which the detection, using the pulsed neutron interrogation technique, of the capture gamma radiation and of the inelastic gamma radiation, firstly, during the pulses of duration T2 and, secondly, during the T4 durations separating the pulses of duration T2, is undertaken by a detector (D2) which is preferentially adapted for the detection of capture gamma radiation.

**FIG. 1**

FIG. 2

FIG. 3

FIG. 5

NOMBRE DE COUPS

TEMPS DE COINCIDENCE ALPHA-GAMMA (ns)

# FIG. 4

NOMBRE DE COUPS

ENERGIE

# FIG. 6

**EP 2 359 124 B1**

## RÉFÉRENCES CITÉES DANS LA DESCRIPTION

**Documents brevets cités dans la description**

- US 6393085 B1
- US 20070241283 A1